# EUROPÄISCHE PATENTSCHRIFT

(11) **EP 0 454 616 B1**
(45) Veröffentlichungstag und Bekanntmachung des Hinweises auf die Patenterteilung: **28.05.1997**
(21) Anmeldenummer: 91810159.3
(22) Anmeldetag: 11.03.1991
(51) Int. Cl.: F16C 33/30, F16C 33/04, C04B 41/50, C04B 41/52

(54) **Wälzkörper, Verfahren zu seiner Herstellung und Wälzkörper- oder Gleitlager**
Roller body, process for making same and roller or slide bearing
Elément de roulement, procédé de fabrication d'un tel élément, et roulement ou palier lisse

(30) Priorität: 27.04.1990 CH 1452/90
(43) Veröffentlichungstag der Anmeldung: 30.10.1991
(73) Patentinhaber: Saphirwerk Industrieprodukte AG, 2555 Brügg (CH)
(72) Erfinder: Fridez, Jean-Daniel, Dr., CH-5512 Wohlenschwil (CH); Keller, Georges W., CH-4800 Zofingen (CH)
(74) Vertreter: Peege, Klaus

(56) Entgegenhaltungen:
- EP-A- 0 196 201
- EP-A- 0 310 043
- DE-C- 3 509 572
- FR-A- 2 378 204
- THIN SOLID FILMS, Band 153, Nr. 1, 26. Oktober 1987, Seiten 253-266, Lausanne, CH; H.J. BOVING et al.: "Properties and performance of chemical-vapour- deposited TiC-coated ball-bearing components"
- TR-KURZINFORMATION, Band 69, Nr. 1, 4. Januar 1977, Seite 5; "TR- Kurzinformation"
- WORLD PATENTS INDEX, Woche 27, Nr. 84-168808, Derwent Pubications Ltd, Londen, GB; & JP-A-59 093 348 (SUMITOMO ELEC.) 29-05-1984

## Beschreibung

Die Erfindung betrifft einen Wälzkörper für ein Wälzlager (z.B. eine Kugel für ein Kugellager) sowie ein Verfahren zur Herstellung eines Wälzkörpers begriff sowie ein Wälzlager.

Keramische Werkstoffe, insbesondere sogenannte "Ingenieur-Keramik" oder "Struktur-Keramik" sind seit Jahren bekannt und gebräuchlich. Zu diesen Werkstoffen zählen vor allem Aluminiumoxid Al₂O₃, Zirkonoxid ZrO₂, Siliziumcarbid SiC, Siliziumnitrid/Sialon Si₃N₄ und dergleichen. Diese Werkstoffe setzen sich in der Praxis immer mehr durch. 3eispiele solcher Werkstoffe sind z.3. in den folgenden Publikationen beschrieben:
- "Technische Keramik"" G. Willmann, B. Wielage VULKAN VERLAG, Essen, 1988
- "Handbook and properties of technical & Engineering ceramics"
   R. Morrell, National Physical Laboratory
   Her Majesty's Stationery Office, London, 1985

"Ingenieur"Ingenieur-Keramik-Werkstoffe", insbesondere Siliziumnitrid Si₃N₄ zeichnen sich im Unterschied zu metallischen Werkstoffen durch spezifisch hohe Temperaturfestigkeit, hohe Härte, hohe Formbeständigkeit (hohes Elastizitätsmodul) und hervorragende Korrosionsbeständigkeit aus. Leider zeigen diese Werkstoffe im ungeschmierten Betrieb relativ hohe Reibungskräfte und Verschleiss ("Reibungs- und Verschleissverhalten von Ingenieurkeramik im ungeschmierten Betrieb" M. Woydt SWISS MATERIALS 1 (1989) Seite 19). Wälzkörper in keramischen Werkstoffen, hauptsächlich Siliziumnitrid-Kugeln, finden heute zahlreiche hochtechnologische Einsatzmöglichkeiten in der Kugellager-Technik.

Eine andere bekannte Technik zur Herstellung von hochfesten, laufenden Wälzkörpern besteht in der Beschichtung von Stahl-Körper oder Hartmetall-Körpern mit einer harten Schicht (z.B. Titaniumcarbid TiC)). Das Auftragen der Titancarbid-Schicht geschieht auf bekannte Weise mittels CVD (Chemical Vapor Deposition) oder durch PVD-Verfahren (Physical Vapor Deposition). Mit solchen Methoden lassen sich Wälzkörper mit hoher Festigkeit, Lebensdauer, Korrosionsbeständigkeit und guten tribologischen Eigenschaften dank einer hohen Oberflächengüte herstellen ("Ball bearing with CVD-TiC coated components", H. Bowing, H.E. Hintermann, W. Hänni, S. 155 in "Proceeding of the 3rd European Space Mechanisms & Tribology Symposium" Madrid, Spanien, 30. September - 02. Oktober 1987).

Zwar ist ebenfalls seit langem bekannt, dass die Beschichtung von Stahl- und Hartmetallwerkzeugen mit Titancarbid TiC, Titannitrid TiN und Titancarbonitrid TiCN zu besonders guten Schneideigenschaften und zur Abriebfestigkeit der Schneidkanten führt, doch hat eine Anwendung dieser Beschichtungstechnologie für Wälzkörper keineswegs nahegelegen ("PVD- und CVD-beschichtete Hartmetallwerkzeuge im Vergleich" D. T. Quinto, E. Valerius, S. 109 in "Proceedings Neuer Beschichtungs-Technologie COAT TECH 89, DEMAT EXPOSITION MANAGING, Frankfurt, 1989: "Herstellung, Eigenschaften und Anwendungen Plasma-Chemisch Abgeschiedener CVD Diamantschichten", K.V. Ravi, J.M. Pinneo S. 385 in "Proceedings Neuer Beschichtungs-Technologie COAT TECH 89, DEMAT EXPOSITION MANAGING, Frankfurt, 1989).

Zusammenfassend, sind die heutigen Wälzlager-Körper:
- Stahl-Wälzkörper für konventionelle Anwendungen
- TiC-Stahl-Wälzkörper für Anwendungen mit hoher Lebensdauer
- TiC-Hartmetall-Wälzkörper für Anwendungen bei mittleren Temperaturen (^{~} 700 °C)
- Si₃N₄-Wälzkörper für Anwendungen bei hohen Temperaturen (^{~} 1000 °C) und bei hohen Geschwindigkeiten

Der Erfindung liegt die Aufgabe zugrunde, vor allem bekannte Wälslager zu verbessern, insbesondere hinsichtlich ihrer tribologischen Eigenschaften (niedrige Reibung und hohe Verschleissfestigkeit) und ihrer Applikationsmöglichkeiten bei hohen Temperaturen weiter zu verbessern.

Erfindungsgemäss wurde dabei gemäss Patentanspruch 1 gefunden, dass sich die Eigenschaften von Wälzkörper- -Bauteilen aus Keramik-Werkstoffen mit einer Dichte von weniger als 6,5 und einer Härte von wenigstens 1000 Vickers, insbesondere aus Siliziumnitrid, durch eine erfindungsgemässe, harte, vor allem geläppte Beschichtung (mit oder ohne Verbindungsschicht) ganz entscheidend verbessern lassen. Dies liegt vor allem an der Auswahl und Kombination der erfindungsgemäss vorgeschlagenen Oberflächen-Beschaffenheiten mit den Eigenschaften der Keramik-Werkstoffe (hohe Festigkeit, Biegefestigkeit > 300 MPa, hohe Temperatur-Beständigkeit bis 1000° C, vor allem niedrige Dichte von etwa 3 bis etwa 6,5 g/cm³ und geringe Wärmeausdehnung von etwa 3,0 bis 10 x 10⁻⁶/°K) in Verbindung mit harten Schichten (hohe Härte von > 2000 HV-Vickers, hohe Festigkeit auch bei hohen Temperaturen (bis 800° C), niedrige Reibung und niedriger Verschleiss). Dies erlaubt die Herstellung optimaler Wälzkörper. Die Kombination der beiden Werkstoffe in Verbindung mit der Oberflächengüte Ra gemäss Patentansprüchen führt zu hoher Lebensdauer auch bei härtester Belastung. Damit sind verbesserte Wälzlager für Sonderanwendungen (z.B. TrockenlaufBetrieb bei hohen Temperaturen) herstellbar.

Die Erfindung betrifft auch ein Verfahren zur Herstellung eines Wälzkörpers gemäß Patentanspruch 4.

Besonders gute Ergebnisse lassen sich erzielen, wenn die Verbindungsschicht aus Titannitrid TiN oder aus Titancarbonitrid TiCN für Grundkörper in Siliziumnitrid Si₃N₄ ist und die Beschichtung aus Titancarbid TiC besteht.

Wenn die Schicht aus Diamantwerkstoff (amorph oder polykristallin) besteht, eignet sich als Verbindungsschicht Titannitrid TiN + Titancarbid TiC oder Titancarbonitrid TiCN für Grundkörper in Siliziumnitrid Si₃N₄.

Die Titannitrid-, Titancarbid- und Titancarbonitrid-Schichten lassen sich gut im CVD- oder PVD-Verfahren auftragen. Die bevorzugte Schichtdicke gemäss der Erfindung ist 1 bis 10 µm.

Diamantschichten lassen sich durch "Hot Filament CVD", "Mikrowellen-Plasma-aktiviertes CVD", "Electron assisted CVD" und "Plasma Activated CVD" auftragen. Die bevorzugte Schichtdicke gemäss der Erfindung ist 1 bis 10 µm.

Optimale Wälzkörper lassen sich herstellen, wenn der Grundkörper aus hochfestem Siliziumnitrid Si₃N₄ (Hot Pressed oder Hot Isostatic Pressed Siliziumnitrid) besteht.

Die Laufeigenschaften des Wälzkörpers oder sind besonders gut, wenn der fertig beschichtete Körper eine Rauhigkeit Ra von < 0,01 µm aufweist. Eine Gegenüberstellung der Rauheitswerte Ra zu "Microinch" - Werten, findet sich auf S. 157 der vorstehend genannten Literaturstelle "Ball bearings with CVD-TiC coated components". Hartbeschichtete Wälzkörper und von niedriger Rauheit weisen den niedrigsten Verschleiss und geringste Reibung auf.

Vor allem das präzise Läppen, bis eine Oberflächengüte Ra von 0,01 µm erreicht wird, führt zur Herstellung von hochwertigen Wälzkörpern. Nach heutigen Erfahrungen liegen die Reibungskoeffizienten zwischen harten geläppten Schichten wie TiC, TiCN oder Diamant, aufgebracht auf einem Grundkörper und einem Stahl-Bauteil im Bereich 0,05 bis 0,3 in ungeschmiertem Betrieb.

Die Erfindung ist nachfolgend in Ausführungsbeispielen näher erläutert. Es zeigen:
- Figur 1: eine Kugel mit den Merkmalen der Erfindung,
- Figur 2: einen Wälzzylinder mit den Merkmalen der Erfindung,
- Figur 3: die schematische Darstellung einer Kugel in einer Kugellager-Laufbahn, und

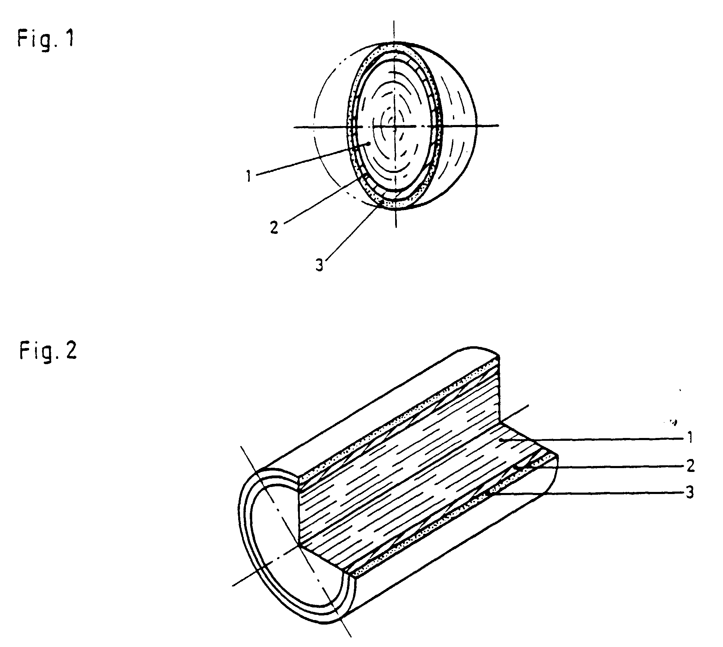

Die Kugel gemäss Figur 1 besteht aus einem Grundkörper 1 aus hochfestem Siliziumnitrid Si₃N₄. Der Grundkörper wurde vor der Beschichtung geschliffen und geläppt, bis eine Rundheit von ^{~} 0.1 µm und eine Oberflächengüte Ra von 0.01 µm erreicht wurde. Als Verbindungsschicht 2 zwischen der harten Schicht und dem Grundkörper wurde eine dünne Titannitrid TiN Schicht von ca. 0.5 µm Dicke aufgebracht. Auf dieser Verbindungsschicht befindet sich die harte Schicht 3 aus Titancarbid TiC mit einer Schichtdicke von ca. 5 µm. Diese Schicht 3 weist eine Oberflächengüte Ra von ca. 0,01 um auf und die Rundheit der gesamten beschichteten Kugeln (1 bis 10 mm Durchmesser) ist etwa 0,1 µm. Die Kugel eignet sich hervorragend für hochtechnische Kugellager mit hoher Belastbarkeit auch in Trockenlaufbetrieb.

Figur 2 zeigt einen zylindrischen Wälzkörper mit einem Grundkörper 1 aus SiAlON-Siliziumnitrid, einer Verbindungsschicht 2 aus Titancarbonitrid TiCN (Schichtdicke ^{~} 0,5 µm) und einer äusseren Schicht 3 aus Titancarbid TiC (Schichtdicke ^{~} 5 µm). Diese Schicht 3 weist eine Oberflächengüte Ra von 0,01 µm und die Rundheit des gesamten Zylinders (3 bis 10 mm Durchmesser) ist etwa 0,5 µm. Dieser Wälzkörper eignet sich vor allem für Lager angewendet bei hohen Temperaturen und/oder für den Trockenlaufbetrieb.

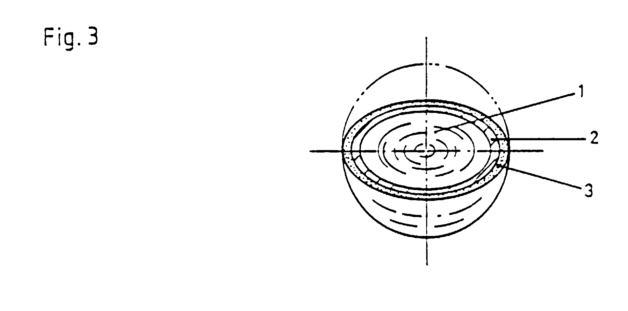

Figur 3 zeigt ein Ausführungsbeispiel einer Kugel mit einem Grundkörper 1 aus Siliziumnitrid Si₃N₄, einer Verbindungsschicht 2 aus Titannitrid TiN + Titancarbid TiC (Schichtdicke ^{~} 1 um) und einer äusseren Schicht 3 aus im CVD-Verfahren aufgetragenem Diamantwerkstoff (Schichtdicke ^{~} 2 µm). Diese Schicht 3 weist eine Oberflächengüte Ra von 0,01 µm auf, und die Rundheit der beschichteten Kugel (Durchmesser 1 mm) ist etwa 0,1 µm. Solche Diamant beschichteten Kugeln eignen sich besonders gut für Kugellager-Anwendungen im Trockenlaufbetrieb.

Bei den erfindungsgemässen Wälzkörpern ist insgesamt nicht nur eine Erhöhung der Härte sondern vor allem eine Verminderung des Reibungskoeffizienten und eine Erhöhung der Oberflächenhomogenität festzustellen.

Mit den beschriebenen Wälzkörpern, hergestellte Wälzlager weisen höhere Belastbarkeit, grössere Lebensdauer und bessere Trockenlaufeigenschaften auf.

## Patentansprüche

1. Wälzkörper für ein Wälzlager, umfassend einen Grundkörper (1) aus einem keramischen Werkstoff, mnit einer Dichte von weniger als 6,5 und einer Härte von wenigstens 1000 Vickers, der keramische Werkstoff vorzugsweise aus Siliziumnitrid (Si₃N₄) bestehend, mit einer eine Oberflächengüte Ra kleiner als 0,025 µm aufweisenden, auf dem Grundkörper aufgebrachten Beschichtung (3) aus:
(a) einem Metallcarbid, insbesondere Titancarbid (TiC) oder Chromiumcarbid (CrₓC_{y}); oder
(b) einem Metallnitrid, insbesondere Titannitrid (TiN) oder Titancarbonitrid (TiCN), oder
(c) einem chemisch abgeschiedenen Diamantwerkstoff.

2. Wälzkörper nach Anspruch 1, dadurch gekennzeichnet, dass zwischen dem Grundkörper (1) und der Beschichtung (3) eine Zwischenschicht als Verbindungsschicht (2) vorgesehen ist, die ein Metall-Carbid (z.B. TiC) oder Metall-Nitrid (z.B. TiN) oder Metall-Karboxide (z.B. Al₂O₃/TiC) oder Metall-Oxinitride (z.B. SiALON) enthält.

3. WälzKörper nach Anspruch 1 oder 2 dadurch gekennzeichnet dass die Schichtdicke der Zwischenschicht (2), etwa 0,1 bis 1,0 µm und die Schichtdicke der Beschichtung (3) etwa 1 bis 30 µm und vorzugsweise 1 bis 10 µm beträgt.

4. Verfahren zur Herstellung eines Wälzkörpers, umfassend folgende Verfahrensschritte:
(a) Herstellung eines Grundkörpers (1) aus einem keramischen Werkstoff mit einer Dichte von weniger als 6,5 und einer Härte von wenigstens 1000 Vickers, einer Oberflächengüte von 0,1 bis 0,01 µm und einer Rundheit von 0,1 bis 1.0 µm, vorzugsweise unter Verwendung von Siliziumnitrid als keramischem Werkstoff;
(b) Aufbringung einer Beschichtung (3) auf den Grundkörper (1) bestehend aus
(1) einem Metallcarbid, insbesondere Titancarbid (TiC) oder "Chromiumcarbid (CrₓC_{y}); oder
(2) einem Metallnitrid, insbesondere Titannitrid (TiN) oder Titancarbonitrid (TiCN); oder
(3) einem chemisch abgeschiedenen Diamantwerkstoff;
(c) Bearbeitung des beschichteten Grundkörpers (1) insbesondere durch Läppen, bis die Oberflächengüte des beschichteten Grundkörpers (1) eine Oberflächengüte Ra von kleiner 0,025 µm, vorzugsweise von etwa 0,01 µm erreicht hat.

5. Verfahren nach Anspruch 4, dadurch gekennzeichnet, dass zwischen dem Grundkörper und der Beschichtung eine Zwischenschicht als Verbindungsschicht aufgebracht wird, die ein Metall-Carbid (z.B. TiC) oder Metall-Nitrid (z.B. TiN) oder Metall-Karboxid (z.B. Al₂O₃/TiC) oder Metall-Oxinitride (z.B. SiALON) enthält.

6. Verfahren nach einem der Ansprüche 4 oder 5, dadurch gekennzeichnet, dass der beschichtete Grundkörper durch Rundläppen, Flachläppen, Zylindrischläppen und/oder Rodieren bearbeitet wird, bis die Oberflächengüte Ra von etwa 0,01 um erreicht ist.

7. Wälzklager, insbesondere Kugellager, dadurch gekennzeichnet, dass es Wälzkörper gemäss einem der Ansprüche 1 bis 3 oder Wälzkörper, hergestellt nach einem Verfahren gemäss einem der Ansprüche 4 bis 6, enthält.

## Claims

1. Roller body for a roller bearing comprising a core body (1) of a ceramic material with a density of less than 6,5 and a hardness of at least 1000 Vickers, the ceramic material preferably being silicon nitride (Si₃N₄) with a coaring (3) deposited upon the core body (1) having a surface quality of less than 0,025 µm of a
(a) metal-carbide, in particular a titanium carbide (TiC) or chromium carbide (Crx Cy); or
(b) metal-nitride, in particular titanium nitrid (TiN) or titanium carbo nitride (TiCN); or
(c) chemically deposited diamond material.

2. Roller body according to claim 2 characterized thereby that between the core body (1) and the coating (3) there is provided an intermediate layer as an adhesion layer which contains a metal-carbide (e.g. TiC) or metal nitride (e.g. TiN) or metal-caboxide (e.g. Al₂O₃/TiC) or metal-oxinitride (e.g. SiALON).

3. Roller body according to claim 1 or 2 characterized thereby that the thickness of the intermediate layer (2) amounts to approximately 0.1 to 1.0 µm, and the thickness of the coating (3) amounts to approximately 1 to 30 µm preferably 1 to 10 µm.

4. Method of manufacturing a roller body comprising the - following method steps
(a) manufacture of a core body (1) of a ceramic material with a density of less than 6.5 and a hardness of at least 1000 Vickers, a surface quality of 0,1 to 0,01 um and roundness of 0,1 to 1,0 µm, especially of silicon nitride as ceramic material.
(b) deposition of a coating (3) upon the core body (1) consisting of a
(1) metal-carbide, in particular a titanium carbide (TiC) or chromium carbide (CrxCy); or
(2) metal nitride, in particular titanium nitride (TiN); or titanium carbo nitride (TiCN); or
(3) chemically deposited diamond material;

5. Method according to claim 4 characterized thereby that between the core body and the coating there is applied an intermediate layer acting as an adhesion layer which contains a metal carbide (e.g. TiC), or metal nitride (e.g. TiN) or metal carboxide (e.g. Al₂O₃/TiC) or a metal oxinitride (e.g. SiALON).

6. Method according to one of the claims 4 or 5 characterized thereby that the coated core body is worked in particular by round lapping, flat lapping, cylindrical lapping, and/or drum grinding with free abrasive particles (Rodieren) until a surface quality Ra of less than 0,025 preferably of approximately 0,01 µm is achieved.

7. Roller bearing, especially ball bearing, characterized thereby that it comprises roller bodies pursuant to one of the claims 1 to 3 or roller bodies manufactured according to a method pursuant to one of the claims 4 to 6.

## Revendications

1. Corps pour un roulement, comprenant un corps de base (1) composé d'une manière céramique, avec une densité inférieure à 6,5 et une dureté d'au moins 1000 Vickers, la matière céramique se composant de préférence de nitrure de silicium (Si₃N₄), avec un revêtement (3) placé sur le corps de base et présentant une qualité de surface Ra inférieure à 0,025 µm, composé :
(a) d'un carbure de métal, en particulier du carbure de titane (TiC) ou du carbure de chrome (CrₓCy) ; ou
(b) d'un nitrure de métal, en particulier du nitrure de titane (TiN) ou du carbonitrure de titane (TiCN), ou
(c) d'une matière diamantée déposée chimiquement.

2. Corps selon la revendication 1, caractérisée en ce au'il est prévu entre le corps de base (1) et le revêtement (3) une concile intermédiaire en tant qui couche de liaison (2), qui contient un carbure de métal (par exemple TiC) ou un nitrure de métal (par exemple TiN) ou un Carboxyde de métal (par exemple Al₂O₃/TiC) ou un oxynitrure de métal (par oxemple SiALON).

3. Corps selon la revendication 1 ou 2, caractérisée en ce que l'épaisseur de couche de la couche intermédiaire (2) est comprise entre 0,1 et 1,0 µm environ et l'épaisseur de couche du revêtement (3) entre 1 et 30 µm et de préférence entre 1 et 10 µm.

4. Procédé de fabrication d'un corps, comprenant les étapes de procédé suivantes :
(a) la fabrication d'un corps de base (1) composé d'une matière céramique avec une densité inférieure à 6,5 et une dureté d'au moins 1000 Vickers, une qualité de surface comprise entre 0,1 et 0,01 µm et une rotondité comprise entre 0,1 et 1,0 µm, de préférence en utilisant du nitrure de silicium en tant que matière céramique ;
(b) la mise en place d'un revêtement (3) sur le corps de base (1) se composant
(1) d'un carbure de métal, en particulier du carbure de titane (TiC) or: du carbure de chrome (CrₓC_{y}) ; ou
(2) d'un nitrure de métal, en particulier du nitrure de titane (TiN) ; ou du carbonitrure de titane (TiCN) ; ou
(3) d'une matière diamantée déposée chimiquement ;
(c) le traitement du corps de base revêtu (1), en particulier par rodage jusqu'à ce qu'on obtienne pour le corps de base revêtu (1) une qualité de surface inférieure à 0,025 µm, de préférence de 0,01 µm environ.

5. Procédé selon la revendication 4, caractérisé en ce qu'on place entre le corps de base et le revêtement une couche intermédiaire en tant que couche de liaison, qui contient un carbure de métal (par exemple TiC) ou un nitrure de métal (par exemple TiN) ou un carboxyde de métal (par exemple Al₂O₃/Tic) ou un oxynitrure de métal (par exemple SiALON).

6. Procédé selon l'une des revendications 4 ou 5, caractérisé en, ce que le corps de base revêtu est travaillé par rodage circulaire, rodage à plat, rodage cylindrique et/ou rodage jusqu'à ce que la qualité de surface Ra ait atteint 0,01 µm environ.

7. Roulement, en particulier un roulement à billes, caractérisé en ce qu'il contient un corps selon l'une des revendications 1 à 3 ou un corps fabriqué selon un procédé selon l'une dos revendications 4 à 6.
